# EUROPÄISCHE PATENTSCHRIFT

(11) **EP 1 385 252 B1**
(45) Veröffentlichungstag und Bekanntmachung des Hinweises auf die Patenterteilung: **13.10.2004**
(21) Anmeldenummer: 02013850.9
(22) Anmeldetag: 22.06.2002
(51) Int. Cl.: H02K 1/18, H02K 15/02

(54) **Elektrische Maschine mit Aussenläufer und einer gegossenen Nabe**
Electric machine with outer rotor and cast hub
Machine électrique avec rotor extérieur et moyeu moulé

(43) Veröffentlichungstag der Anmeldung: 28.01.2004
(73) Patentinhaber: ZF Sachs AG, 97424 Schweinfurt (DE)
(72) Erfinder: Baumeister, Jens, Dipl.-Ing., 97422 Schweinfurt (DE); Welke, Knut, Dipl.-Ing., 97529 Sulzheim (DE); Wurst, Siegfried, 74321 Bietigheim/Bissingen (DE)

(56) Entgegenhaltungen:
- EP-A- 1 079 498
- DE-U- 29 500 984
- US-A- 2 783 404
- PATENT ABSTRACTS OF JAPAN vol. 010, no. 259 (E-434), 4. September 1986 (1986-09-04) -& JP 61 085028 A (MATSUSHITA SEIKO CO LTD), 30. April 1986 (1986-04-30)
- PATENT ABSTRACTS OF JAPAN vol. 2000, no. 24, 11. Mai 2001 (2001-05-11) -& JP 2001 197691 A (TOYOTA MOTOR CORP), 19. Juli 2001 (2001-07-19)
- PATENT ABSTRACTS OF JAPAN vol. 2002, no. 04, 4. August 2002 (2002-08-04) -& JP 2001 339881 A (MITSUBISHI ELECTRIC CORP), 7. Dezember 2001 (2001-12-07)

## Beschreibung

Die Erfindung betrifft eine elektrische Maschine gemäß dem Oberbegriff des Patentanspruchs 1.

Elektrische Maschinen sind allgemein bekannt. Diese umfassen einen ortsfesten Stator, der aus lackisolierten Elektroblechlamellen zusammengefügt ist und eine elektrische Wicklung trägt und weiterhin einen sich gegenüber dem Stator drehbar gelagerten Rotor, welcher bei einem Innenläufer radial innerhalb und bei einem Außenläufer radial außerhalb des Stators angeordnet ist. Bei dem letztgenannten Motortyp ist es bekannt, das Statorblechpaket auf einer metallischen Nabe, bspw. aus Aluminium oder einer Aluminiumlegierung, zu lagern und dieses damit gegenüber von Reaktionsmomenten beim Betreiben der elektrischen Maschine drehfest abzustützen. Des Weiteren sind innerhalb der Nabe Kühlkanäle ausgebildet, die mit einem Kühlkreislauf in Strömungsverbindung stehen, wodurch die anfallende Verlustwärme im Betriebszustand abgeführt werden kann. Für einen effizienten Wärmeübergang zwischen dem Statorblechpaket und der Nabe ist deren gegenseitiger Kontaktbereich von besonderer Bedeutung. In diesem sollen die sich gegenüberliegenden Oberflächen von Blechpaket und Nabe passgenau ausgebildet sein. Bei der Fertigung des Stators der elektrischen Maschine wird üblicherweise zuerst die Nabe separat gegossen und anschließend, insbesondere die Kontaktfläche zu dem Statorblechpaket, spanend endbearbeitet. Unabhängig davon wird durch Stapelung von Blechlamellen ein Statorblechpaket gefertigt. Die Verbindung der Nabe mit dem Blechpaket erfolgt anschließend durch Aufschrumpfen.

Das beschriebene Herstellungsverfahren kann die bezüglich der Funktion gestellten Forderungen ausreichend erfüllen, ist jedoch mit großen Nachteil sehr arbeits- und kostenintensiv.

Bei innenlaufenden Elektromotoren ist es üblich, das Statorblechpaket innerhalb des außen angeordneten Motorgehäuses anzuordnen, welches eine Stütz- und gleichzeitig eine Kühlfunktion übernimmt. Dazu ist es bereits bekannt, anstelle des Aufschrumpfens, das Statorblechpaket außen mit einer Aluminiumlegierung zu umgießen und dadurch den Herstellungsprozeß wesentlich zu verbilligen. Der Schwund des Aluminiums sorgt beim Abkühlen dafür, daß das Gehäuse das Statorblechpaket fest und flächig umschließt und ein sehr guter Wärmetransport über die Kontaktfläche ermöglicht wird. Ein vor dem Gießvorgang in die Statorbohrung eingepresste gehärtete Stahlbüchse dient als Zentrierhalterung des Blechpakets in einer Druckgießform. Diese wird erst nach dem vollständigen Abkühlen des Aluminiumgehäuses entnommen, wodurch eine Deformation des Statorblechpaketes sicher vermieden wird.

Es besteht auch bei einem elektrischen Außenläufermotor das Bestreben, die in diesem Fall radial innerhalb des Statorblechpaketes angeordnete Statornabe mit Hilfe eines Gußverfahres direkt am Blechpaket auszubilden. Dieses ist jedoch nicht ohne Weiteres möglich, da hierbei die radial innenliegende Alu-Nabe beim Abkühlen im Anschluß an den Gießvorgang einem sichtbaren Schwund unterliegt, wobei sich die Nabe vom Blechpaket zumindest bereichsweise wieder ablösen kann. Damit wird eine den Anforderungen genügende passfeste Verbindung der Nabe zum Statorblechpaket verhindert.

Aus der gattungsbildenden JP 61085028A ist eine elektrische Maschine mit einem aus Blechlamellen ausgeführten Stator bekannt, der im Bereich einer Zentralausnehmung Verankerungselemente mit einer in Radialrichtung hinterschnittenen Kontur aufweist Dabei sind identische Blechlamellen deckungsgleich zu einem Blechpaket gestapelt und mittels Nieten verbunden. Die radial innen angeordnete Nabe ist als Gußteil aus einem Nichteisenmetall oder aus einem synthetischen Harz ausgeführt, wobei die Verankerungselemente des Blechpakets von dem Gußteil zumindest teilweise umschlossen sind. Auf diese Weise wird eine radiale Verzahnung von Nabe und Blechpaket und eine sichere drehfeste Verbindung dieser Teile geschaffen. Beim Betreiben der elektrischen Maschine können bei hohen Belastungen jedoch axiale Relativbewegungen von Blechpaket und Nabe nicht ausgeschlossen werden. Obwohl die gegenseitige Drehmitnahme durch diese Anordnung vollständig gewährleistet ist, treten infolge des Schrumpfprozesses beim Gießen der Nabe im mikroskopischen Bereich Hohlräume auf, die beim Abtransport von Verlustwärme des Stators über die Nabe als hemmende Isolationsschicht wirken.

Der Erfindung liegt die Aufgabe zu Grunde, eine elektrische Maschine zu schaffen, die in der Zentralausnehmung des Statorblechpakets eine darin eingegossene Nabe aufweist, die noch besser mit dem Statorblechpaket verbunden ist und somit die Nachteile des Standes der Technik überwindet.

Die Aufgabe wird durch die im Kennzeichen des Patentanspruchs 1 angegebenen Merkmale gelöst. Beim Eingießen der Nabe in die Zentralausnehmung des Statorblechpakets werden von dem schmelzflüssigen Metall die am Blechpaket angeordneten Verankerungselemente zumindest teilweise umschlossen. Beim Abkühlen schrumpft die Nabe, wobei die nach radial innen gerichteten Zugspannungen zum Teil von den Verankerungselementen aufgefangen werden. Durch die Verankerungselemente wird dabei die durchgängige radiale Erstreckung der Nabe unterbrochen, wobei der Bereich der Nabe, der radial außerhalb der hinterschnittenen Kontur angeordnet ist, einer betragsmäßig nur relativ geringen thermisch induzierten Schrumpfung unterliegt. Somit kann die Nabe auch nach dem Abkühlen einen flächigen großflächigen Kontakt zum Hauptkörper des Blechpakets ausbilden. Die axiale Fixierung der Nabe wird erfindungsgemäß erzielt werden, wenn die Verankerungselemente axiale Zwischenräume aufweisen, in denen die Nabe beim Gießen eine dazu korrespondierende Struktur ausbildet. Durch diese Maßnahme werden zusätzlich axiale Flächen ausgebildet, die zu einer Vergrößerung der Kontaktfläche führen und den Wärmeübergang zwischen der Nabe und dem Statorblechpaket weiter verbessern. In einer vorteilhaften Weiterbildung der Erfindung ist vorgesehen, daß die Verankerungselemente unmittelbar an den Blechlamellen ausgeführt sind. Dadurch kann auf separate, z.B. am Blechpaket eingepresste Verankerungselemente, verzichtet werden und die Fertigung kostengünstig erfolgen.

Als günstig haben sich Verankerungselemente erwiesen, die als Haken ausgebildet sind und von den Blechlamellen abstehen. Durch diese Vorsprünge wird die Ausbreitung der magnetischen Flusses in den Blechlamellen gegenüber der ursprünglichen Ausführung kaum beeinflußt, so daß diese Maßnahme prinzipiell an allen Statorblechpaketen ohne Nachteil auf die physikalischen Eigenschaften und nahezu ohne zusätzlichen Fertigungsaufwand ausführbar ist.

Es ist jedoch auch alternativ dazu möglich, die Verankerungselemente durch Ausnehmungen in den Blechlamellen auszubilden. Da davon ausschließlich der radial innerste Bereich der Lamellen betroffen ist, sind auch hierbei kaum Verluste bei der Ausbreitung des magnetischen Flusses der elektrischen Maschine zu erwarten.

Die beim Abkühlen der Gußnabe auftretenden Zugspannungen können zu einer unerwünschten ovalen Deformation des Blechpaketes führen. Dieser Effekt kann weitestgehend unterdrückt werden, indem identische Verankerungselemente oder aus verschiedenen Verankerungselementen gebildete Gruppen gleichmäßig in Umfangsrichtung des Blechpakets verteilt sind. Im Idealfall heben sich die wirkenden Zugspannungen im Mittelpunkt des Stators, durch den die Maschinenachse verläuft, auf.

Mit technologischen Vorteil für den Gießvorgang weist die Nabe an den Stirnseiten des Blechpakets einen Bund auf. Auf diese Weise wird das unkontrollierte Auslaufen von schmelzflüssigem Metall aus der Gießform sicher unterbunden.

In Kombination mit dem erwähnten Bund ist es ferner vorteilhaft, die Blechlamellen an der radial äußeren Kontur miteinander zu verschweißen. Damit wird einem axialen Auffächern des Blechpaketes an der Außenkontur entgegengewirkt.

In einer besonders vorteilhaften Ausgestaltung der Erfindung ist vorgesehen, eine Blechlamelle in Umfangsrichtung aus mindestens zwei Segmenten zu bilden. Die Fertigung von Statoren elektrischer Maschinen kann durch den effektiveren Materialeinsatz erheblich kostengünstiger erfolgen. Die nach dem Zusammensetzen der Segmente im Innenraum vergossene Nabe hält das Blechpaket durch die Wirkung der Zugspannungen fest zusammen. Zusätzliche konstruktive Maßnahmen zum Zusammenhalten der Segmente erübrigen sich damit.

Ein besonders fest verbundenes Blechpaket ergibt sich, wenn die Segmente axial benachbarter Schichten in Umfangsrichtung versetzt angeordnet sind. Dadurch kann eine unerwünschte Verformung des Stators bei Eingießen der Nabe sicher vermieden werden.

Bei einer anderen, ebenfalls mit Vorteil zu realisierenden Variante, sind die Segmente axial benachbarter Schichten deckend angeordnet. Bei der Fertigung des Blechpakets werden die Segmente zu Segmentpaketen gestapelt, welche in einem weiteren Schritt lateral zusammengefügt werden können.

Die Erfindung wird im Folgenden anhand einer Zeichnung beispielhaft erläutert. Es zeigen:
- Figur 1: Schematische Darstellung einer elektrischen Maschine in Außehläuferbauweise,
- Figur 2a,b: Darstellung von Statorblechlamellen mit verschieden gestalteten Verankerungselementen,
- Figur 2c: schematische Darstellung eines Radialteilschnittes des Verbindungsbereichs zwischen einem Statorblechpaket und einer darin eingegossenen Nabe,
- Figur 3: perspektivischer Ausschnitt aus einem Blechpaket, wobei die Verankerungselemente zusätzlich axial gruppiert sind,
- Figur 4a,b: schematische Darstellung von verschiedenen Einzelsegmenten einer mehrteiligen Blechlamelle,
- Figur 5a,b: schematische Darstellung von Stapelfolgen bei aus Einzelsegmenten gestapelten Statorblechpaketen.

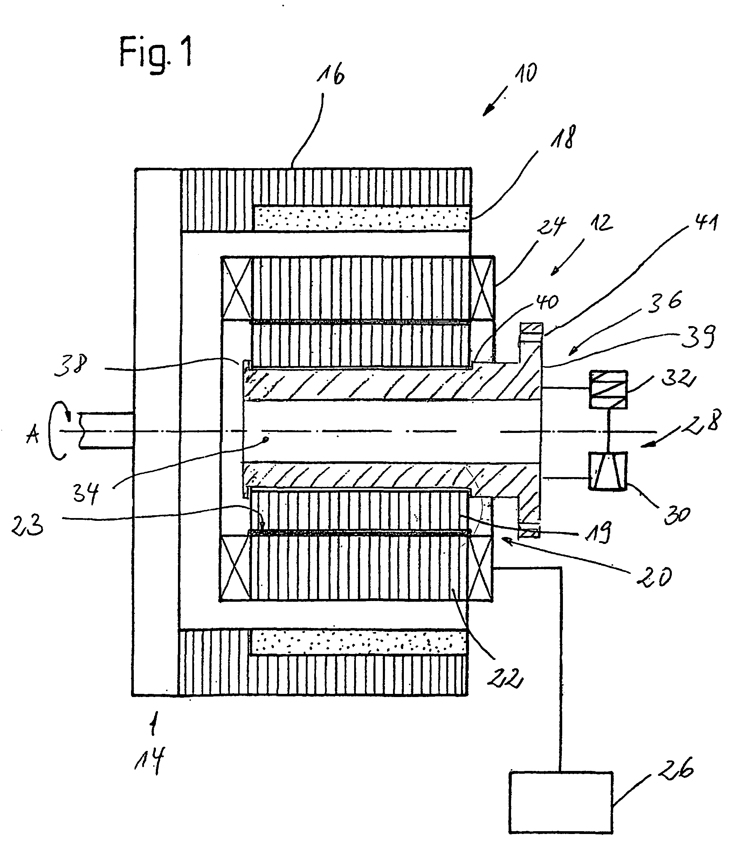

Die Fig. 1 zeigt eine schematische Darstellung einer elektrischen Maschine 10 in Außenläuferbauweise. Eine derartige elektrische Maschine, die beispielsweise als permanentmagneterregte Synchronmaschine ausgebildet sein kann, verfügt über einen feststehenden Stator 12 und über einen um eine Achse A umlaufenden Rotor 14. Der Rotor 14 umfaßt ein lamelliertes Blechpaket 16, welches an der Innenumfangsfläche eine Mehrzahl von Permanentmagneten 18 aufweist. Der Stator 12 umfaßt ein weiteres aus Blechlamellen 19 gebildetes Blechpaket 20, welches radial außen eine Anzahl von Wickelzähnen 22 trägt, welche entweder direkt am Blechpaket 20 ausgeformt sind oder separat hergestellt werden und nachträglich an dem Blechpaket 20 befestigt werden. Die einzelnen Blechlamellen 19 sind mittels einer Beschichtung gegeneinander elektrisch isoliert und durch eine Stanzpaketierung miteinander verbunden. Alternativ oder auch zusätzlich können die Blechlamellen 19 mit einem Backlack verklebt werden oder an deren äußeren Kontur durch mehrere axiale Laserschweißnähte 23, die bevorzugt am Nutgrund oder am Innendurchmesser ausgeführt sind, zusammengehalten werden. In Nuten zwischen diesen Wickelzähnen 22 sind elektrische Wicklungungen in Form von Spulen 24 angeordnet. Die Wicklungen 24 sind einzelnen elektrischen Strängen zugeordnet, wobei die einem gemeinsamen Strang zugeordneten Wicklungen 24 miteinander verschaltet und über entsprechende elektrische Verbindungen und Anschlüsse mit einer Leistungselektronik 26 zum Steuern der elektrischen Maschine 10 verbunden sind. Wenn die Wicklungen 24 von einem Strom durchflossen werden, wird dadurch das magnetische Feld der elektrischen Maschine 10 und daraus resultierend eine Antriebsbewegung erzeugt. Der Stator 12 weist eine Zentralausnehmung 34 auf, in der eine darin eingegossene Nabe 36 aus einer Leichtmetalllegierung, bspw. einem Aluminiumwerkstoff, angeordnet und mit dem Stator 12 drehfest verbunden ist. Die Nabe 36, die vorteilhafterweise mit einem Druckgußverfahren hergestellt wird, erstreckt sich axial über die gesamte Länge des Statorblechpakets 20 hinaus und weist an den Stirnseiten jeweils einen Bund 38, 40 auf, welche das Statorblechpaket in dessen radial inneren Bereich axial einfassen. Der Bund 38, 40 ragt nur wenige Millimeter, z.B. 2 bis 5mm, über die Innenkontur des Blechpaketes 20 nach radial aussen. Diese Ausbildung genügt, um die axiale Kontur der Nabe 36 beim Gießvorgang genau zu definieren und das Herauslaufen von schmelzflüssigem Gießmaterial aus der Zentralausnehmung 34 sicher zu vermeiden. Beim Erstarren schrumpft die Gußnabe 36 sowohl in axialer als auch in radialer Richtung. Als Folge des axialen Schrumpfens unterliegt das Blechpaket 20 im radial inneren Bereich einem axialen Druck, welcher zu einem axialen Auffächern der Einzellamellen 19 im axial äußeren Bereich des Blechpaketes 20 führen kann. Dieser Effekt kann insbesondere durch die bereits genannte Laserschweißnaht 23 vermieden werden. Ein Ende der Nabe 36 ist als Flansch 39 gestaltet und weist Bohrungen 41 zur Befestigung des Stators 12 an einem zeichnerisch nicht dargestellten ortsfesten Bauteil, bspw. einem Träger, einem Gehäuse eines Verbrennungsmotors oder einem Getriebegehäuse, auf. Die Nabe 36 umfasst weiterhin nicht dargestellte Kühlkanäle, die mit einer Kühlfüssigkeit befüllt sind und Bestandteil einer Kühleinrichtung 28 der elektrische Maschine 10 sind. Beim Betrieb der elektrischen Maschine 10 wird die als Wärme anfallende Verlustleistung zunächst an die Kühlflüssigkeit abgegeben, dann mittels einer Kühlmittelpumpe 30 zu einem Wärmetauscher 32 transportiert und dort der Kühleinrichtung 28 entzogen.

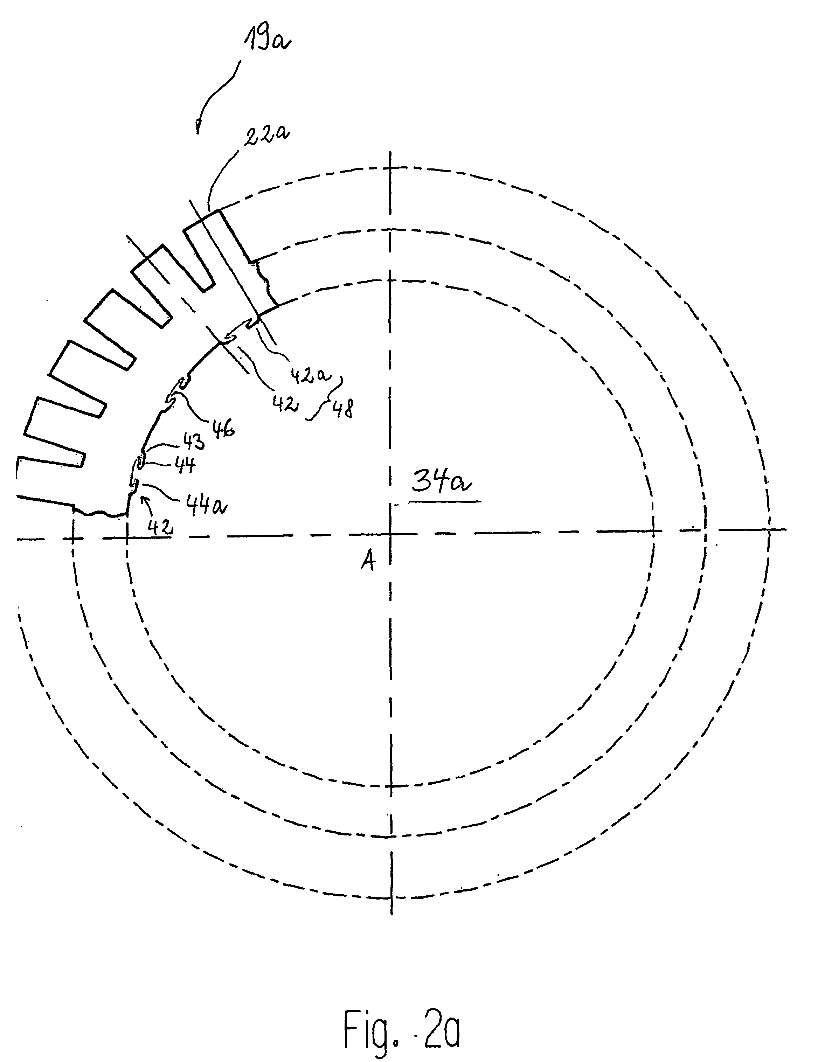

Im folgenden wird erläutert, wie die Verbindung der Gußnabe 36 zu dem Statorblechpaket 20 ausgeführt ist. Dazu zeigt Figur 2a einen Ausschnitt einer kreisringförmigen Statorblechlamelle 19a aus Elektroblech mit einer Zentralausnehmung 34a, wobei die Lamelle 19a am Außenumfang radial abstehende Pole bzw. Wickelzähne 22a und an der Innenkontur eine Mehrzahl vom Lamellengrundkörper abstehende hakenförmige Verankerungselemente 42, 42a aufweist. Die Verankerungselemente sind mit einem kurzem im wesentlichen radial verlaufenden Ansatzbereich 43 mit der Blechlamelle 19a verbunden und weisen weiterhin einen sich im wesentlichen in Umfangsrichtung erstreckenden Abschnitt 44, 44a auf. Von einer senkrecht zur Zeichenebene stehenden Achse A betrachtet, die auch die Achse der elektrischen Maschine darstellt, weisen die Verankerungselemente 42, 42a an der Blechlamelle 19a und damit am Statorblechpaket 20 eine in Radialrichtung hinterschnittenen Kontur auf, die einen Zwischenraum 46 einschließt. Die Elemente 42 und 42a unterscheiden sich bezüglich der Erstreckungsrichtung des Abschnittes 44, 44a. Jeweils zwei Verankerungselemente 42, 42a sind mit deren Abschnitten 44, 44a zueinander orientiert angeordnet und bilden ein Verankerungspaar 48. In Figur 2a sind jedem Wickelzahn 22a je ein Verankerungselement 42 bzw. 42a zugeordnet, welche leicht gegenüber der Symmetrielinie eines Wickelzahns 22a versetzt angeordnet ist. Dabei beträgt die Winkelteilung der Wickelzähne 22a die Hälfte derjenigen deckungsgleicher Verankerungselemente 42 bzw. 42a, das heißt, daß sich ein Verankerungselement 42 nur an jedem zweiten Wickelzahn 22a wiederholt. Identische Verankerungselemente 42 bzw. 42a sind am Innenumfang des Blechpakets gleichmäßig beabstandet. Damit sind auch die Verankerungspaare 48 gleichmäßig am Blechpaket 20 verteilt

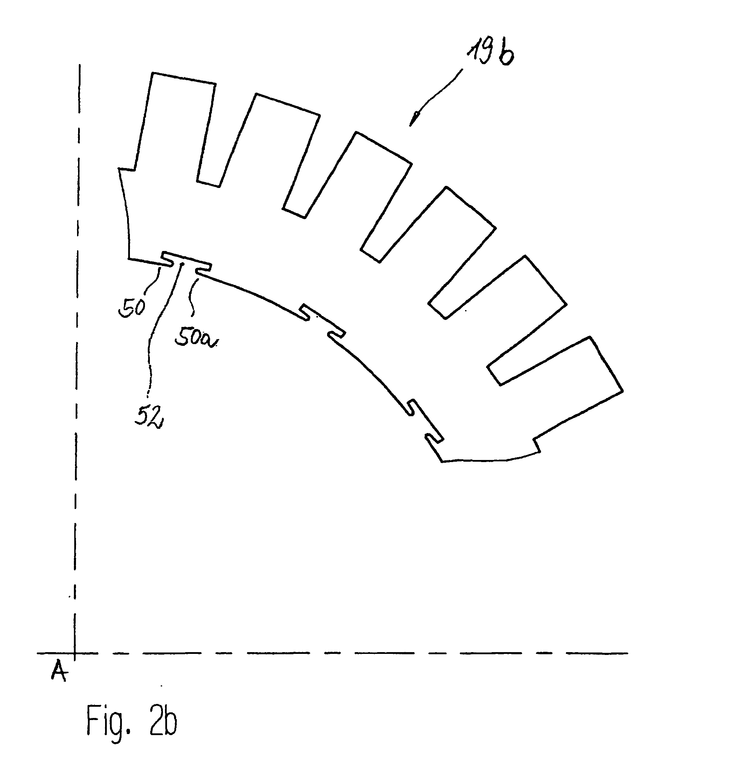

Alternativ zu der Darstellung der Figur 2a zeigt Figur 2b durch Ausnehmungen im Innenumfangsbereich einer Blechlamelle 19b realisierte Verankerungselemente 50, 50a. Die radiale Ausdehnung der Ausnehmung 52 wurde dabei so gewählt, daß die Ausbreitung der magnetischen Feldlinien beim Betreiben der elektrischen Maschine 10 nicht oder nur unwesentlich beeinflußt wird.

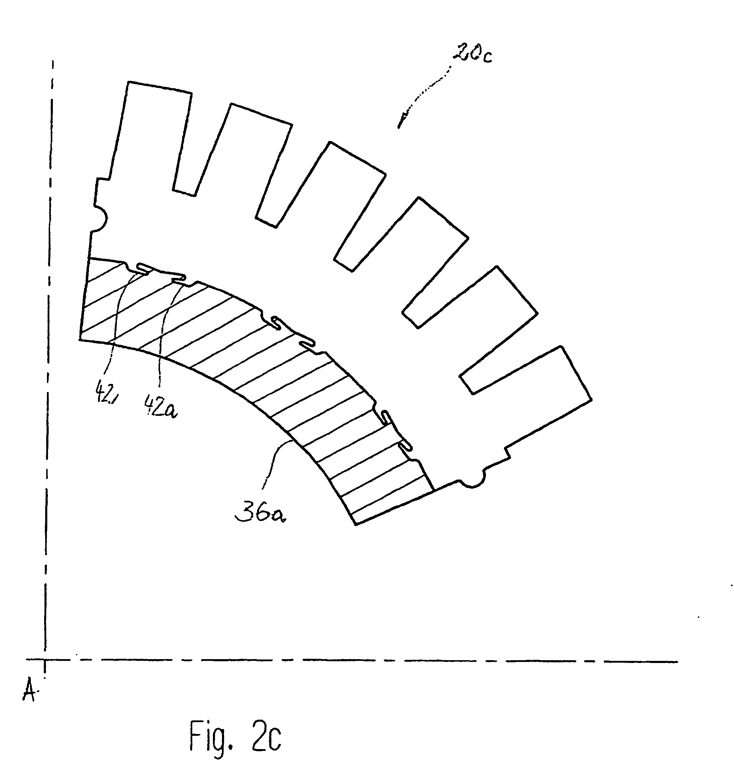

Figur 2c zeigt zur Verdeutlichung schematisch einen teilweisen Radialschnitt des Verbindungsbereichs eines Blechpakets 20c mit einer darin eingegossenen Nabe 36a.

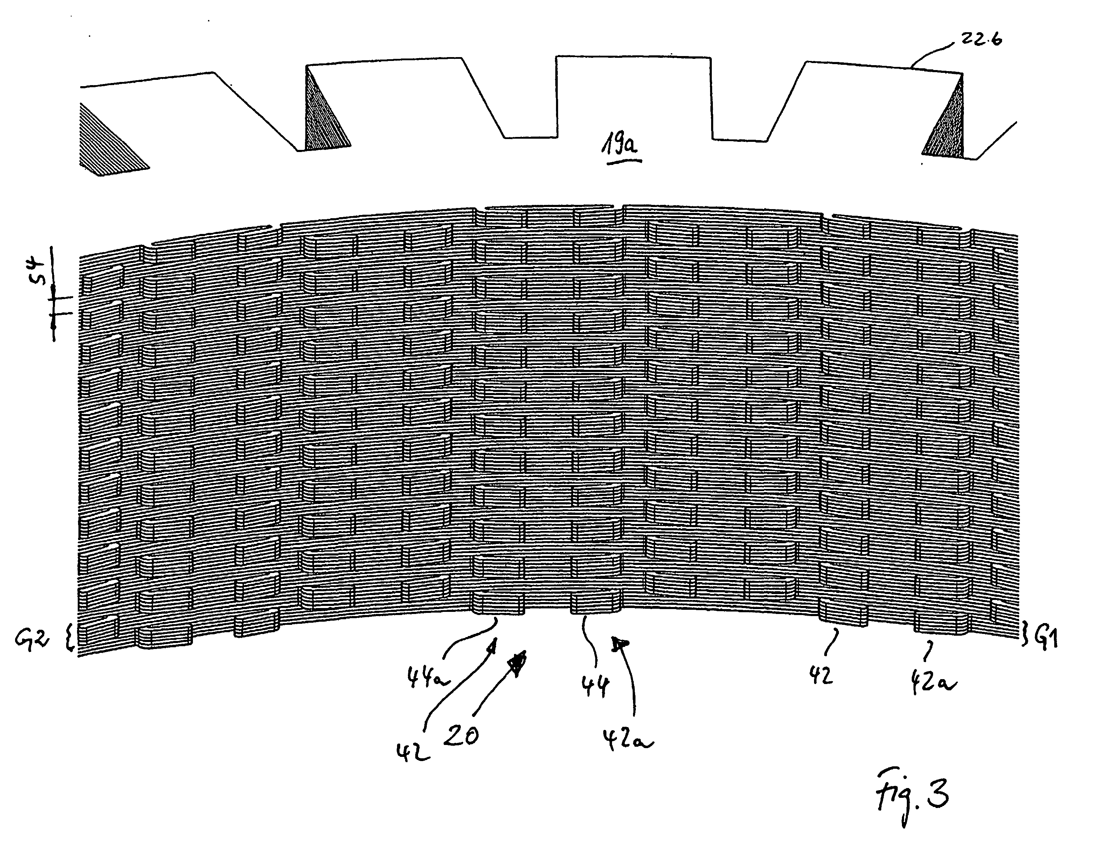

Zur Bildung des vollständigen Statorblechpakets 20 werden zunächst, wie in Figur 3 perspektivisch dargestellt, mehrere in Figur 2a gezeigte Blechlamellen 19a, z.B. 5 Stück, deckungsgleich zu einer ersten Gruppe G1 gestapelt, wobei gleichzeitig auch mehrere Verankerungselemente 42 und 42a zusammengefasst werden. Eine zweite, ebenfalls aus der gleichen Anzahl von Blechlamellen bestehenden Gruppe G2 ist deckungsgleich zu den Wickelzähnen 22b und Nuten des ersten Blechpaketes gestapelt, jedoch wurde die zweite Gruppe um eine Polteilung verdreht angeordnet, so das die von den Verankerungselementen gebildete Struktur nicht zu derjenigen des ersten Blechpaketetes G1 deckend ist. Auf diese Weise bilden die Verankerungselemente 42, 42a am Statorblechpaket 20 axiale Zwischenräume 54, in denen die in dieser Figur nicht dargestellte Nabe beim Eingießen eine dazu korrespondierende Struktur ausbilden kann und dadurch axial am Statorblechpaket 20 fixiert wird. Der hinterschnittene Bereich zwischen den Abschnitten 44, 44a und dem Grundkörper des Blechpakets wird ebenfalls durch das Gußmaterial ausgefüllt, wobei die Verankerungselemente 42, 42a des Blechpakets 20 von der Gußnabe zumindest teilweise umschlossen werden und so die gewünschte drehfeste und flächige Verbindung miteinander herstellen.

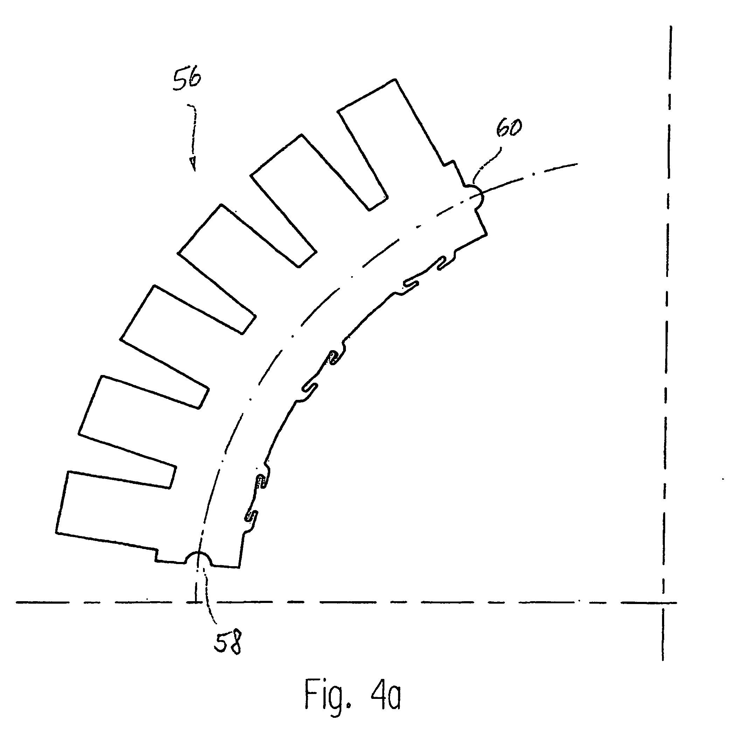

Anstelle von kreisringförmig geschlossenen Lamellen, kann das Statorblechpaket 20 auch aus einer Stapelung von Einzelsegmenten, von denen mindestens zwei einen geschlossenen Kreisring bilden, erzeugt werden. Figur 4a zeigt dazu ein sich über 60° erstreckendes Einzelsegment 56 einer insgesamt 6 - teiligen Blechlamelle, an welchem in Umfangsrichtung an einem Ende als Verbindungselement eine halbkreisförmige Ausnehmung 58 und am anderen Ende eine dazu korrespondierende halbkreisförmige Anformung 60 auf identischen Teilkreisen ausgebildet sind, welche beim Zusammenfügen meherer Einzelsegmente 56 formschlüssig ineinandergreifen und eine Verbindungsstruktur ausbilden. Die Ausbildung der Verankerungselemente im radial inneren Bereich entspricht der bereits in der Figur 2a dargestellten.

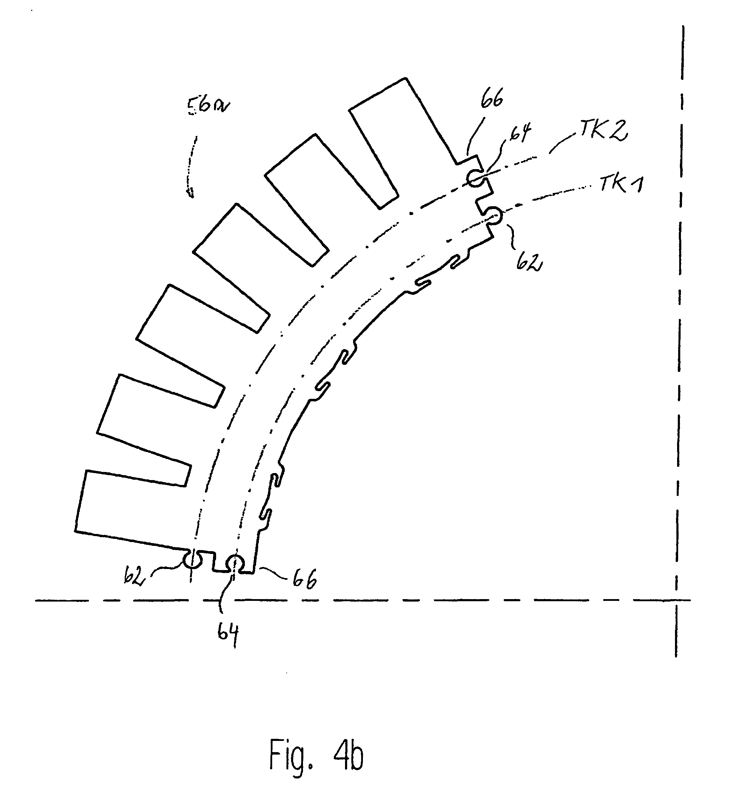

Ein weiteres Beispiel einer segmentierten Lamelle ist mit Fig. 4b gegeben, wobei die endseitigen Verbindungselemente gegenüber dem Beispiel der Figur 4a modifiziert sind. Das Einzelsegment 56a weist hierbei an einem Ende je zwei zueinander komplementäre Verbindungselemente 62 und 64 auf, die auf einem Teilkreis TK1 bzw. TK2 angeordnet sind. Das Element 62 ist als kreisförmige Anformung und das Element 64 als dazu korrespondierende kreisförmige Ausnehmung ausgebildet, die aus einem Fortsatz 66 herausgestanzt wurde. Am gegenüberliegenden Ende des Segments 56a befinden sich auf denselben Teilkreisen TK1 und TK2 ebenfalls zwei Verbindungselemente 62 und 64, die so angeordnet sind, daß beim Verbinden von jeweils zwei Einzelsegmenten 56a ein Element 62 formschlüssig in ein Element 64 eingreift.

Aus den Figuren 4a und 4b ist ersichtlich, daß eine geschlossene Lamelle mindestens aus zwei Segmenten besteht. Je nach Größe der elektrischen Maschine können aber auch bspw. 5, 6, 7 oder 12 oder generell jede beliebige Anzahl von Einzelsegmenten zu einer kreisringförmigen Lamelle zusammengefügt werden.

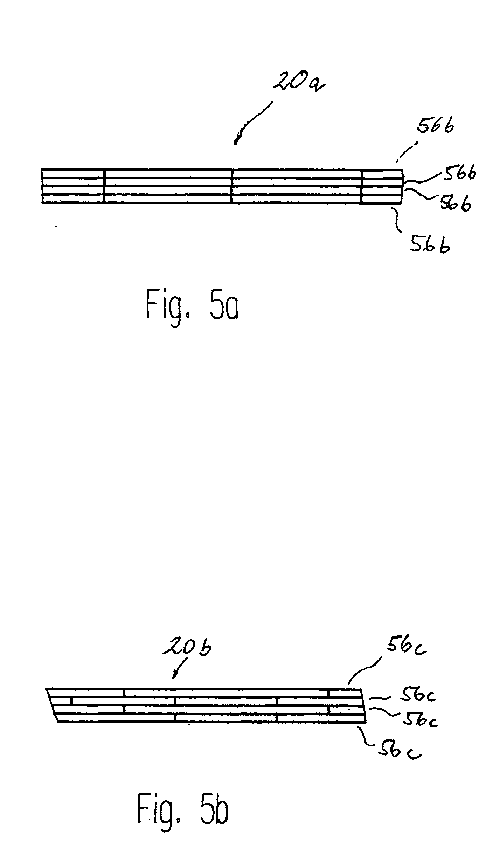

Bei der Erzeugung eines Statorblechpakets 20a aus zusammengefügten Einzelsegmenten 56b können diese im einfachsten Fall axial deckungsgleich angeordnet werden, wie Fig. 5a schematisch in einer teilweisen Seitenansicht zeigt oder alternativ dazu können, wie in Fig. 5b dargestellt, die Segmente 56c axial benachbarter Schichten am Blechpaket 20b in Umfangsrichtung zueinander versetzt angeordnet werden. In diesem Fall werden die Verbindungsbereiche von je zwei Einzelsegmenten durch die axial benachbarten Schichten überbrückt und es ergibt sich bereits allein durch die formschlüssige Verbindung der Einzelsegmente ein relativ guter Zusammnehalt des Blechpakets. Selbstverständlich können auch zunächst mehrere Segmente deckungsgleich zu einer ersten Gruppe gestapelt werden und zu einer zweiten Gruppe in Umfangsrichtung bspw. um wenigstens eine Wickelzahnteilung versetzt gestapelt werden. Beim Eingießen des Stators in ein aus Einzelsegmenten aufgebautes Blechpaket wird infolge des bei Abkühlen einsetzenden Schrumpfens eine nach radial innen gerichtete Zugspannung erzeugt, welche das Blechpaket ohne zusätzliche Maßnahmen sicher zusammenhält.

### Bezugszeichenliste

- 10: elektrische Maschine
- 12: Stator
- 14: Rotor
- 16: lamelliertes Rotorblechpaket
- 18: Permanentmagnete
- 19, 19a, 19b,: Stator-Blechlamelle
- 20, 20a, 20b, 20c: Blechpaket
- 22, 22a, 22b: Wickelzahn
- 23: Laserschweißnaht
- 24: Spule
- 26: Leistungselektronik
- 28: Kühleinrichtung
- 30 .: Kühlmittelpumpe
- 32: Wärmetauscher
- 34, 34a: Zentralausnehmung
- 36, 36a: Nabe
- 38, 40: Bund
- 39: Flansch
- 41: Bohrung
- 42, 42a: Verankerungselement
- 43: im Wesentlichen radial verlaufender Abschnitt eines Veranke rungselementes
- 44, 44a: im Wesentlichen in Umfangsrichtung verlaufender Abschnitt eines Verankerungselementes
- 46: Zwischenraum
- 48: Verankerungspaar
- 50, 50a: Verankerungselement
- 52: Ausnehmung
- 54: axialer Zwischenraum
- 56, 56a, 56b, 56c: Einzelsegment
- 58: halbkreisförmige Ausnehmung
- 60: halbkreisförmige Anformung
- 62, 64: Verbindungselemente
- G1, G2: Gruppe von identisch gestapelten Blechlamellen

## Patentansprüche

1. Elektrische Maschine, umfassend einen Stator mit
- einem aus einer Schichtanordnung von Blechlamellen gebildetem Blechpaket (20, 20a, 20b), welches eine zylindrische Zentralausnehmung (34) aufweist und
- einer Nabe (36, 36a), die innerhalb der Zentralausnehmung angeordnet und mit dem Blechpaket (20, 20a, 20b) drehfest verbunden ist, wobei
- das Blechpaket (20, 20a, 20b) im Bereich der Zentralausnehmung (34) Verankerungselemente (42, 42a) mit einer in Radialrichtung hinterschnittenen Kontur aufweist und
- die Nabe (36, 36a) als Gußteil ausgeführt ist, wobei die Verankerungselemente (42, 42a) des Blechpakets (20, 20a, 20b) von dem Gußteil (36, 36a) zumindest teilweise umschlossen sind,
**dadurch gekennzeichnet,**
**daß** die Verankerungselemente (42, 42a, 50, 50a) am Stator (12) axiale Zwischenräume (54) aufweisen, in denen die Nabe (36, 36a) eine dazu korrespondierende Struktur ausbildet.

2. Elektrische Maschine nach Anspruch 1,
**dadurch gekennzeichnet,**
**daß** die Verankerungselemente (42, 42a) an den Blechlamellen (19, 19a, 19b) ausgeführt sind.

3. Elektrische Maschine nach Anspruch 2,
**dadurch gekennzeichnet,**
**daß** die Verankerungselemente (42, 42a) als Haken ausgebildet sind und von den Blechlamellen (19, 19a, 19b) abstehen.

4. Elektrische Maschine nach Anspruch 2,
**dadurch gekennzeichnet,**
**daß** die Verankerungselemente (50, 50a) durch Ausnehmungen in einer Blechlamelle (19, 19a, 19b) gebildet sind.

5. Elektrische Maschine nach einem der Ansprüche 1 bis 4,
**dadurch gekennzeichnet,**
**daß** identische Verankerungselemente (42, 42a, 50, 50a) gleichmäßig in Umfangsrichtung am Statorblechpaket (20, 20a, 20b) verteilt sind.

6. Elektrische Maschine nach einem der Ansprüche 1 bis 5,
**dadurch gekennzeichnet,**
**daß** die Nabe (36) an den Stimseiten des Blechpakets (20) je einen Bund (38, 40) aufweist.

7. Elektrische Maschine nach einem der Ansprüche 1 bis 6,
**dadurch gekennzeichnet,**
**daß** die Blechlamellen (19) an der radial äußeren Kontur des Statorblechpakets (20) durch eine Schweißnaht (23) miteinander verschweißt sind.

8. Elektrische Maschine nach einem der Ansprüche 1 bis 9,
**dadurch gekennzeichnet, daß** eine Blechlamelle (19, 19a, 19b) in Umfangsrichtung aus mindestens zwei Segmenten (56, 56a, 56b, 56c) gebildet wird.

9. Elektrische Maschine nach Anspruch 8,
**dadurch gekennzeichnet,**
**daß** Segmente (56, 56a, 56b, 56c) axial benachbarter Schichten in Umfangsrichtung versetzt angeordnet sind, wobei Verbindungsbereiche von je zwei Einzelsegmenten (56, 56a, 56b, 56c) durch die axial benachbarten Schichten überbrückt werden.

10. Elektrische Maschine nach Anspruch 9,
**dadurch gekennzeichnet,**
**daß** Segmente (56, 56a, 56b, 56c) axial benachbarter Schichten deckungsgleich angeordnet sind.

## Claims

1. Electric machine comprising a stator having
- a laminated core (20, 20a, 20b) which is formed from a layered arrangement of laminations and which has a cylindrical central recess (34), and
- a hub (36, 36a) which is arranged inside the central recess and is connected fixed in terms of rotation to the laminated core (20, 20a, 20b),
- the laminated core (20, 20a, 20b) having, in the region of the central recess (34), anchoring elements (42, 42a) with a contour which is undercut in the radial direction, and
- the hub (36, 36a) being embodied as a cast part, the anchoring elements (42, 42a) of the laminated core (20, 20a, 20b) being at least partially surrounded by the cast part (36, 36a),
**characterized**
**in that** the anchoring elements (42, 42a, 50, 50a) have, on the stator (12), axial intermediate spaces (54) in which the hub (36, 36a) forms a structure which corresponds thereto.

2. Electric machine according to Claim 1, **characterized in that** the anchoring elements (42, 42a) are formed on the laminations (19, 19a, 19b).

3. Electric machine according to Claim 2, **characterized in that** the anchoring elements (42, 42a) are embodied as hooks and protrude from the laminations (19, 19a, 19b).

4. Electric machine according to Claim 2, **characterized in that** the anchoring elements (50, 50a) are formed by recesses in a lamination (19, 19a, 19b).

5. Electric machine according to one of Claims 1 to 4, **characterized in that** identical anchoring elements (42, 42a, 50, 50a) are distributed uniformly in the circumferential direction on the stator laminated core (20, 20a, 20b).

6. Electric machine according to one of Claims 1 to 5, **characterized in that** the hub (36) has a collar (38, 40) on each of the end sides of the laminated core (20).

7. Electric machine according to one of Claims 1 to 6, **characterized in that** the laminations (19) are welded to one another on the radially outer contour of the stator laminated core (20) by means of a weld seam (23).

8. Electric machine according to one of Claims 1 to 9, **characterized in that** a lamination (19, 19a, 19b) is formed in the circumferential direction from at least two segments (56, 56a, 56b, 56c).

9. Electric machine according to Claim 8, **characterized in that** segments (56, 56a, 56b, 56c) of axially adjacent layers are arranged offset in the circumferential direction, connecting regions of each two individual segments (56, 56a, 56b, 56c) being spanned by the axially adjacent layers.

10. Electric machine according to Claim 9, **characterized in that** segments (56, 56a, 56b, 56c) of axially adjacent layers are arranged congruently.

## Revendications

1. Machine électrique comprenant un stator avec
- un paquet de tôles (20, 20a, 20b) formé d'un arrangement en couches de lamelles en tôle, lequel présente un creux central cylindrique (34) et
- un moyeu (36, 36a) qui est disposé à l'intérieur du creux central et qui est relié au paquet de tôles (20, 20a, 20b) de manière à ne pas pouvoir tourner,
- le paquet de tôles (20, 20a, 20b) présentant dans la zone du creux central (34) des éléments d'ancrage (42, 42a) avec un contour à contre-dépouille dans le sens radial et
- le moyeu (36, 36a) étant réalisé sous la forme d'une pièce en fonte, les éléments d'ancrage (42, 42a) du paquet de tôles (20, 20a, 20b) étant au moins partiellement entourés par la pièce en fonte (36, 36a),
**caractérisée en ce**
**que** les éléments d'ancrage (42, 42a, 50, 50a) sur le stator (12) présentent des espaces intermédiaires (54) dans le sens axial dans lesquels le moyeu (36, 36a) forme une structure correspondante.

2. Machine électrique selon la revendication 1, **caractérisée en ce que** les éléments d'ancrage (42, 42a) sont exécutés sur les lamelles en tôle (19, 19a, 19b).

3. Machine électrique selon la revendication 2, **caractérisée en ce que** les éléments d'ancrage (42, 42a) sont réalisés sous la forme de crochets et dépassent des lamelles en tôle (19, 19a, 19b).

4. Machine électrique selon la revendication 2, **caractérisée en ce que** les éléments d'ancrage (50, 50a) sont formés par des creux dans une lamelle en tôle (19, 19a, 19b).

5. Machine électrique selon l'une des revendications 1 à 4, **caractérisée en ce que** les éléments d'ancrage identiques (42, 42a, 50, 50a) sont distribués régulièrement dans le sens du pourtour sur le paquet de tôles du stator (20, 20a, 20b).

6. Machine électrique selon l'une des revendications 1 à 5, **caractérisée en ce que** le moyeu (36) présente à chaque fois une collerette (38, 40) sur les côtés frontaux du paquet de tôles (20).

7. Machine électrique selon l'une des revendications 1 à 6, **caractérisée en ce que** les lamelles en tôle (19) sont soudées entre elles par un cordon de soudure (23) sur le contour extérieur radial du paquet de tôles du stator (20).

8. Machine électrique selon l'une des revendications 1 à 9, **caractérisée en ce qu'**une lamelle en tôle (19, 19a, 19b) est formée d'au moins deux segments (56, 56a, 56b, 56c) dans le sens du pourtour.

9. Machine électrique selon la revendication 8, **caractérisée en ce que** les segments (56, 56a, 56b, 56c) des couches voisines dans le sens axial sont disposés décalés dans le sens du pourtour, les zones de liaison de deux segments individuels (56, 56a, 56b, 56c) étant court-circuitées par les couches voisines dans le sens axial.

10. Machine électrique selon la revendication 9, **caractérisée en ce que** les segments (56, 56a, 56b, 56c) des couches voisines dans le sens axial sont disposés en coïncidence.
